(19) Europäisches Patentamt
European Patent Office
Office européen des brevets

(11) **EP 2 509 828 B1**

(12) **EUROPÄISCHE PATENTSCHRIFT**

(45) Veröffentlichungstag und Bekanntmachung des Hinweises auf die Patenterteilung:
**16.03.2016   Patentblatt 2016/11**

(21) Anmeldenummer: **10790388.2**

(22) Anmeldetag: **06.12.2010**

(51) Int Cl.:
*B60R 21/0132* *(2006.01)*

(86) Internationale Anmeldenummer:
**PCT/EP2010/068921**

(87) Internationale Veröffentlichungsnummer:
**WO 2011/069939 (16.06.2011 Gazette 2011/24)**

(54) **VERFAHREN UND STEUERGERÄT ZUR ERMITTLUNG EINES TYPS EINER KOLLISION EINES FAHRZEUGS**

METHOD AND CONTROL DEVICE FOR DETERMINING A TYPE OF A COLLISION OF A VEHICLE

PROCÉDÉ ET BOÎTIER DE COMMANDE POUR LA DÉTERMINATION DU TYPE D'UNE COLLISION D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2009   DE 102009054473**

(43) Veröffentlichungstag der Anmeldung:
**17.10.2012   Patentblatt 2012/42**

(73) Patentinhaber: **Robert Bosch GmbH**
**70442 Stuttgart (DE)**

(72) Erfinder:
• **WIELAND, Jochen**
**71272 Renningen (DE)**
• **MELCHERT, Jens**
**Gerlingen**
**70839 (DE)**
• **MONTAGANAHALLI SRINIVASAMURTHY, Arunkumar**
**Karnataka (IN)**
• **LANG, Gunther**
**70563 Stuttgart (DE)**
• **MAYER, Philip**
**71696 Moeglingen (DE)**

(56) Entgegenhaltungen:
**EP-A1- 1 607 273     WO-A2-97/22009**
**GB-A- 2 403 935**

EP 2 509 828 B1

**Beschreibung**

Stand der Technik

Die vorliegende Erfindung bezieht sich auf ein Verfahren zur Ermittlung eines Typs einer Kollision eines Fahrzeugs, auf ein entsprechendes Steuergerät sowie auf ein entsprechendes Computerprogrammprodukt.

Die DE 10 2004 029 816 A1 betrifft eine Vorrichtung zur Erkennung eines Unfalls im Kraftfahrzeugbereich mittels eines Beschleunigungssensors, der bezüglich einer Querachse des Fahrzeugs geneigt in dem Fahrzeug montiert ist.

Die EP 1 607 273 A1 offenbart, eine Vorrichtung und ein Verfahren zur Erkennung eines Unfalls im Kraftfahrzeugbereich mit mindestens einem peripheren Beschleunigungssensor zur Erfassung von Beschleunigungsdaten im Falle eines Unfalls, wobei der mindestens eine periphere Beschleunigungssensor zum Erfassen eines kombinierten Signals, bestehend aus Beschleunigungsdaten bezüglich der Längsachse des Fahrzeugs und aus Beschleunigungsdaten bezüglich der Querachse des Fahrzeugs, mit seiner Messachse in der durch die Längsachse und die Querachse des Fahrzeugs aufgespannten Ebene unter einem vorbestimmten Neigewinkel bezüglich der Querachse geneigt in dem Fahrzeug montiert ist.

Offenbarung der Erfindung

Vor diesem Hintergrund wird mit der vorliegenden Erfindung ein Verfahren zur Ermittlung eines Typs einer Kollision eines Fahrzeugs, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Kern der Erfindung ist eine Funktion zur Kollisionstyp-Erkennung (Crashtyp-Erkennung) mit Hilfe von peripheren X-Y Sensoren. Beispielsweise können 2-kanalige periphere Beschleunigungssensoren zum Einsatz kommen. Durch eine Vektor-Addition von linear unabhängigen Sensorsignalen, beispielsweise X-Signale und Y-Signale, können aus den linear unabhängigen Sensorsignalen resultierende Beschleunigungssignale errechnet werden. Mittels einer Signalverarbeitung sowie einem geeigneten Algorithmus kann basierend auf den resultie-renden Beschleunigungssignalen die Kollisionstyp-Erkennung durchgeführt werden.

Die vorliegende Erfindung kann auf einem Einsatz von 2-kanaligen peripheren Beschleunigungssensoren, z. B. in der B-Säule des Fahrzeugs angeordneten XY-Sensoren, basieren. Es kann eine Signal-Vorverarbeitung durchgeführt werden, bei der z.B. eine Tiefpassfilterung der von den peripheren Beschleunigungssensoren bereitgestellten Signale durchgeführt wird. Anschließend kann eine Berechnung einer resultierenden Beschleunigung aus den beiden Einzelkanälen der peripheren Sensoren erfolgen. Die Berechnung kann auf einer Vektor-Addition basieren. Anschließen kann eine Signal-Weiterverarbeitung, z.B. mittels Integration oder Differenzbildung durchgeführt werden und ein nachfolgender Algorithmus zur Kollisionstyp-Erkennung ausgeführt werden. Bei dem Algorithmus, kann es sich um eine spezielle Logik mit Schwellwertvergleichen handeln.

Vorteilhafterweise ermöglicht der erfindungsgemäße Ansatz, gegenüber dem Einsatz von Zentral-Sensoren bzw. gegenüber dem Einsatz von 1-Kanaligen peripheren Beschleunigungssensoren, eine verbesserte Kollisions-Typ-Erkennung in Bezug auf eine Winkel-, Offset- und Frontal-Kollision. Insbesondere ist eine bessere Separierbarkeit von Winkel- und Offset-Kollisionen möglich. Ferner ergibt sich eine mögliche Einsparung von Sensoren im zentralen Steuergerät. Im Gegensatz zu einem unter einem festen Winkel eingebauten 1-kanaligen Beschleunigungssensor kann durch unterschiedliche Gewichtung der X- und Y-Komponenten bei der Vektoraddition eine quasi stufenlose Sensierrichtung nachgestellt werden.

Die vorliegende Erfindung schafft ein Verfahren zur Ermittlung eines Typs einer Kollision eines Fahrzeugs, das die folgenden Schritte umfasst: Empfangen einer ersten Beschleunigungsinformation, einer zweiten Beschleunigungsinformation, einer dritten Beschleunigungsinformation und einer vierten Beschleunigungsinformation über eine Empfangsschnittstelle, wobei die erste Beschleunigungsinformation eine Beschleunigung des Fahrzeugs in einer ersten Richtung, die zweiten Beschleunigungsinformation eine Beschleunigung des Fahrzeugs in einer zweiten Richtung, die dritte Beschleunigungsinformation eine Beschleunigung des Fahrzeugs in einer dritten Richtung und die vierte Beschleunigungsinformation eine Beschleunigung des Fahrzeugs in einer vierten Richtung repräsentiert, wobei die erste und die dritte Richtung jeweils eine Hauptkomponente in einer Fahrzeuglängsrichtung und die zweite und die vierte Richtung jeweils eine Hauptkomponente in zueinander entgegengesetzten Fahrzeugquerrichtungen aufweisen; Bestimmen einer ersten resultierenden Beschleunigungsinformation aus der ersten Beschleunigungsinformation und der zweiten Beschleunigungsinformation und einer resultierenden Beschleunigungsinformation aus der dritten Beschleunigungsinformation und der vierten Beschleunigungsinformation; Kombinieren der ersten resultierenden Beschleunigungsinformation und der zweiten resultierenden Beschleunigungsinformation, um mindestens eine Auswerteinformation zu erhalten; und Ermitteln des Typs der Kollision basierend auf der mindestens einen Auswerteinformation.

Der Typ der Kollision kann definieren, auf welche Weise ein Aufprall des Fahrzeugs auf ein Hindernis stattfindet. Beispielsweise auf welcher Fahrzeugseite die Kollision stattfindet und ob das Fahrzeug in einem Winkel oder frontal auf eine Barriere oder ein anderes Fahrzeug auftrifft und ob dabei eine vollständige oder teilweise Überlappung besteht. Somit kann es sich bei dem Typ der Kollision um eine Frontalkollision, eine Offsetkollision oder eine Winkelkollisionen handeln. Die Beschleunigungsinformationen können Signale oder Werte repräsentieren, die von Beschleunigungssensoren bereitgestellt werden, die im Fahrzeug angeordnet sind. Die Beschleunigungsinformationen können einen zeitlichen Verlauf von Beschleunigungen des Fahrzeugs in unterschiedlichen Richtungen angeben. Dabei können sich zwei der Beschleunigungsinformationen auf eine Fahrzeuglängsachse und zwei der Beschleunigungsinformationen auf eine Fahrzeugquerachse beziehen. Die Hauptkomponenten der Beschleunigungsinformationen können dabei exakt auf die jeweilige Fahrzeugachse bezogen sein oder einen Winkelversatz dazu aufweisen. Die beiden resultierenden Beschleunigurigsinformationen können mittels Vektoraddition aus den Beschleunigungsinformationen bestimmt werden. Somit können die resultierenden Beschleunigungsinformationen jeweils einen zeitlichen Verlauf einer Beschleunigung des Fahrzeugs in entlang einer festgelegten Richtung abbilden. Zur Weiterverarbeitung kann eine Aufsummierung der zeitlichen Verläufe der resultierenden Beschleunigungsinformationen durchgeführt werden. Die Kombination der resultierenden Beschleunigungsinformationen kann eine Summen-, Differenz- und/oder Verhältnisbildung umfassen. Der Typ der Kollision kann durch geeignete Vergleiche mit Schwellwerten ermittelt werden.

Gemäß einer Ausführungsform können die Startpunkte der Hauptkomponenten der ersten und der zweiten Richtung in Bezug auf die Fahrzeugquerrichtung versetzt zueinander angeordnet sein. Dies trifft beispielsweise dann zu, wenn die Beschleunigungsinformationen von Sensoren bereitgestellt werden, die auf entgegengesetzten Fahrzeugseiten angeordnet sind. Die Startpunkte können dabei durch eine Position der Sensoren im Fahrzeug bestimmt sein. Beispielsweise können die Sensoren auf entgegengesetzten Fahrzeugseiten auf einer Fahrzeugquerachse angeordnet sein. Auf einer Fahrzeugquerachse kann bedeuten, dass die Sensoren im gleichen oder nahezu gleichen Abstand von einem vorderen oder hinteren Fahrzeugende angeordnet sind. Sind auf einer oder auf beiden Fahrzeugseiten mehrere Sensoren in unterschiedlichen Abständen zu dem vorderen Fahrzeugende angeordnet, so können jeweils Signale einander gegenüberliegender Sensoren erfindungsgemäß genutzt werden. Fällt ein Sensor aus, dessen Signale genutzt werden, so können stattdessen die Signale eines benachbart angeordneten Sensors genutzt werden.

Die resultierenden Beschleunigungsinformationen können jeweils mittels einer Vektoraddition aus den entsprechenden Beschleunigungsinformationen bestimmt werden. Auf diese Weise bleiben die Richtungsinformationen der Beschleunigungsinformationen erhalten.

Das erfindungsgemäße Verfahren kann einen Schritt des Gewichtens der ersten Beschleunigungsinformationen mit einem ersten Gewichtungswert, der zweiten Beschleunigungsinformation mit einem zweiten Gewichtungswert, der dritten Beschleunigungsinformation mit einem dritten Gewichtungswert und der vierten Beschleunigungsinformation mit einem vierten Gewichtungswert umfassen, um eine gewichtete erste, zweite, dritte und vierte Beschleunigungsinformation zu erhalten. Im Schritt des Bestimmens kann die erste resultierende Beschleunigungsinformation aus der gewichteten ersten Beschleunigungsinformation und der gewichteten dritten Beschleunigungsinformation bestimmt und die zweite resultierende Beschleunigungsinformation kann aus der gewichteten zweiten Beschleunigungsinformation und der gewichteten vierten Beschleunigungsinformation bestimmt werden. Durch die unterschiedlichen Gewichtungswerte können gewünschte Sensierrichtungen eingestellt werden. Die resultierenden Beschleunigungsinformationen können sich jeweils auf diese Sensierrichtungen beziehen.

Im Schritt des Kombinierens kann eine Differenz aus der ersten resultierenden Beschleunigungsinformation und der zweiten resultierenden Beschleunigungsinformation gebildet werden. Im Schritt des Ermittelns kann die Differenz mit einem Schwellwert verglichen werden, um den Typ der Kollision zu erkennen. Insbesondere kann auf diese Weise zwischen einer Winkel- oder Offset-Kollision und einer Frontalkollision unterschieden werden.

Ferner kann im Schritt des Ermittelns die Differenz mit einem weiteren Schwellwert verglichen werden, um zu entscheiden, ob bei der Kollision Rückhaltemittel auszulösen sind oder nicht auszulösen sind. Auf diese Weise kann eine unnötige Auslösung von Insassenschutzmitteln vermieden werden.

Auch kann im Schritt des Kombinierens eine Summe aus der ersten resultierenden Beschleunigungsinformation und der zweiten resultierenden Beschleunigungsinformation und ein Quotient aus der Differenz und der Summe gebildet werden. Im Schritt des Ermittelns kann der Quotient mit einem weiteren Schwellwert verglichen werden, um den Typ der Kollision zu erkennen und/oder der Kollision eine Fahrzeugseite zuzuordnen. Auf diese Weise kann insbesondere zwischen einer Winkel- oder Offset-Kollision und einer Frontalkollision mit vollständiger Überlappung unterschieden werden.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einer der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:

Fig. 1 ein Ablaufdiagramm eines Verfahrens zur Kollisionstyp-Erkennung gemäß einem Ausführungsbeispiels der vorliegenden Erfindung;

Fig. 2 eine Darstellung einer Anordnung von Beschleunigungssensoren;

Fig. 3 eine Darstellung von resultierenden Beschleunigungssignalen der in Fig. 2 gezeigten Anordnung;

Fig. 4 eine Darstellung von Beschleunigungssignalen bei unterschiedlichen Kollisionstypen;

Fig. 5 eine Darstellung von resultierenden Beschleunigungssignalen bei unterschiedlichen Kollisionstypen;

Fig. 6 ein Blockschaltbild eines Verfahrens zur Kollisionstyp-Erkennung gemäß einem weiteren Ausführungsbeispiel der vorliegenden Erfindung;

Fig. 7 ein Blockschaltbild eines Algorithmus zur Kollisionstyp-Erkennung gemäß einem Ausführungsbeispiel der vorliegenden Erfindung; und

Figuren 8 bis 10 graphische Darstellungen von aus den Beschleunigungssignalen ermittelten Signalverläufen, gemäß Ausführungsbeispielen der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

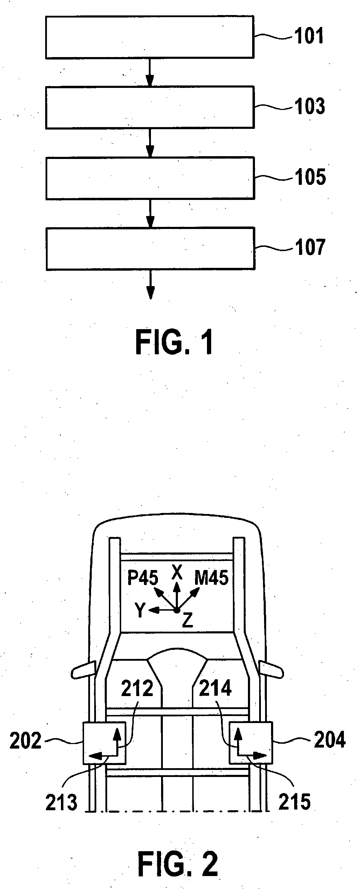

Fig. 1 zeigt ein Ablaufdiagramm eines Verfahrens zur Ermittlung eines Typs einer Kollision eines Fahrzeugs, gemäß einem Ausführungsbeispiel der vorliegenden Erfindung. Das Verfahren kann ausgeführt werden, nachdem ein Auftreten der Kollision erkannt wird. Zusätzlich oder alternativ kann das Verfahren zur Erkennung des Auftretens einer Kollision eingesetzt werden.

In einem Schritt 101 werden Beschleunigungsinformationen empfangen, die von Sensoren bereitgestellt werden, die im Fahrzeug angeordnet sind. Bei den Sensoren kann es sich um Beschleunigungssensoren handeln, die an unterschiedlichen Positionen im Fahrzeug angeordnet sein können. Dabei kann ein Sensor auch mehrere Beschleunigungsinformationen bereitstellen, denen unterschiedliche Beschleunigungsrichtungen zugeordnet sind. Beispielsweise können zwei der Beschleunigungsinformationen auf Beschleunigungswerten des Fahrzeugs basieren, die in einer Fahrzeuglängsrichtung gemessen werden, und zwei weitere Beschleunigungsinformationen können auf Beschleunigungswerten des Fahrzeugs basieren, die in entgegengesetzten Fahrzeugquerrichtungen, beispielsweise in Richtung der rechten und der linken Fahrzeugseite, gemessen werden.

In einem Schritt 103 werden aus den Beschleunigungsinformationen resultierenden Beschleunigungsinformationen bestimmt. Dazu können die Beschleunigungsinformationen zunächst vorverarbeitet werden, so dass die resultierenden Beschleunigungsinformationen auch aus vorverarbeiteten Beschleunigungsinformationen bestimmt werden können. Die Vorverarbeitung kann eine Gewichtung der Beschleunigungsinformationen umfassen. Entsprechende Gewichtungsfaktoren können vorbestimmt sein oder beispielsweise situationsabhängig bereitgestellt oder angepasst werden. Die Gewichtungsfaktoren können auch abhängig von einer Ausrichtung der Beschleunigungssensoren im Fahrzeug sowie abhängig von einem Fahrzeugtyp eingestellt werden. Bei der Bestimmung kann jeweils eine Beschleunigungsinformation, die der Längsrichtung zugeordnet ist, mit einer Beschleunigungsinformation, die einer der Querrichtungen zugeordnete ist, verknüpft werden. Auf diese Weise kann beispielsweise eine erste resultierende Beschleunigungsinformation bestimmt werden, die anteilsmäßig eine Beschleunigung des Fahrzeugs zur rechten Fahrzeugseite berücksichtigt und eine zweite resultierende Beschleunigungsinformation bestimmt werden, die anteilsmäßig eine Beschleunigung des Fahrzeugs zur linken Fahrzeugseite berücksichtigt.

In einem Schritt 105 können die resultierenden Beschleunigungsinformationen miteinander kombiniert werden.

Beispielsweise können die resultierenden Beschleunigungsinformationen miteinander addiert, voneinander subtrahiert oder auf eine andere geeignete Weise miteinander kombiniert werden.

In einem Schritt 107 kann basierend auf der oder den Kombinationen der resultierenden Beschleunigungsinformationen der Typ der Kollision bestimmt werden. Insbesondere kann zwischen Frontalkollisionen und Offset- oder Winkelkollisionen unterschieden werden. Auch kann bestimmt werden, auf welcher Fahrzeugseite die Kollision erfolgt ist und ob es erforderlich ist, Insassenschutzmittel auszulösen. Dazu kann im Schritt 107 ein Auswertealgorithmus ausgeführt werden, der die aus den resultierenden Beschleunigungsinformationen bestimmten Kombinationsinformationen auswertet. Dies kann beispielsweise mittels geeigneter Schwellwerte erfolgen.

Fig. 2 zeigt ein Fahrzeug in dem gemäß einem Ausführungsbeispiel der Erfindung zwei Beschleunigungssensoren 202, 204 angeordnet sind. Der Beschleunigungssensor 202 ist in etwa mittig auf der linken Fahrzeugseite und der Beschleunigungssensor 204 ist in etwa mittig auf der rechten Fahrzeugseite angeordnet. Ferner ist ein Koordinatensystem mit einer X-, Y- und Z-Achse gezeigt. Die X-Achse bezeichnet eine Längsachse in Fahrtrichtung, die Y-Achse eine Querachse und die Z-Achse eine Hochachse des Fahrzeugs. In dem Koordinatensystem sind ferner eine Richtung P45 und eine Richtung M45 aufgetragen. Richtungsvektoren der Richtungen P45, M45 liegen in der X-Y-Ebene und weisen gegenüber der X-Richtung jeweils eine mit unterschiedlichen Vorzeichen versehene Winkelabweichung, gemäß diesem Ausführungsbeispiel von +45° und -45°, auf.

Die Beschleunigungssensoren 202, 204 können jeweils als 2-kanalige periphere Beschleunigungssensoren ausgebildet sein, die jeweils eine Beschleunigung in

X-Längsrichtung 212, 214 und eine Beschleunigung in Y-Querrichtung 213, 215 bestimmen können. Gemäß diesem Ausführungsbeispiel können beide Beschleunigungssensoren 202, 204 eine Beschleunigung in Fahrtrichtung erfassen. Der Beschleunigungssensor 202 kann zusätzlich eine Beschleunigung 213 zur linken Fahrzeugseite, also in Y-Richtung und der Beschleunigungssensor 204 kann zusätzlich eine Beschleunigung 215 zur rechten Fahrzeugseite, also in X-Richtung erfassen.

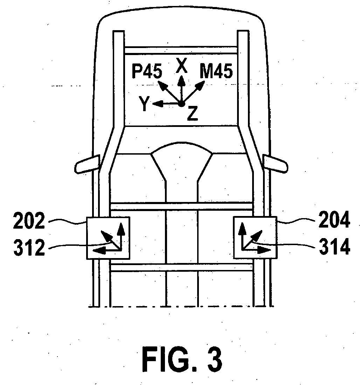

Fig. 3 zeigt für die anhand von Fig. 2 beschriebenen Beschleunigungssensoren 202, 204 eine graphische Darstellung einer Bestimmung von resultierenden Beschleunigungsinformationen 312, 314. Eine Berechnung der resultierenden Beschleunigungsinformationen 312, 314 in Form von abgeleiteten Beschleunigungsgrößen kann durch Vektor-Addition, hier z.B. in Bezug auf ein 45 ° - Richtung erfolgen. Gemäß diesem Ausführungsbeispiel zeigt die resultierende Beschleunigungsinformation 312 eine Beschleunigung des Fahrzeugs in der Richtung P45, also schräg nach links vorne und die resultierende Beschleunigungsinformation 314 zeigt eine Beschleunigung des Fahrzeugs in der Richtung M45, also schräg nach rechts vorne an. Auf Grundlage der resultierenden Beschleunigungsinformationen 312, 314 kann erfindungsgemäß der Kollisionstyp ermittelt werden.

Bei einem Signal-Vergleich zeigt sich, dass die Einbeziehung der Y-Komponenten der Signale im Unterschied zur Auswertung der reinen X-Komponenten sehr vorteilhaft ist. Ursache dafür ist, dass sich die in Offset- und Winkelcrashs enthaltenen Y-Anteile auf der kollisionszugewandten Seite verstärken, während auf der kollisionsabgewandten Seite eine Abschwächung stattfindet.

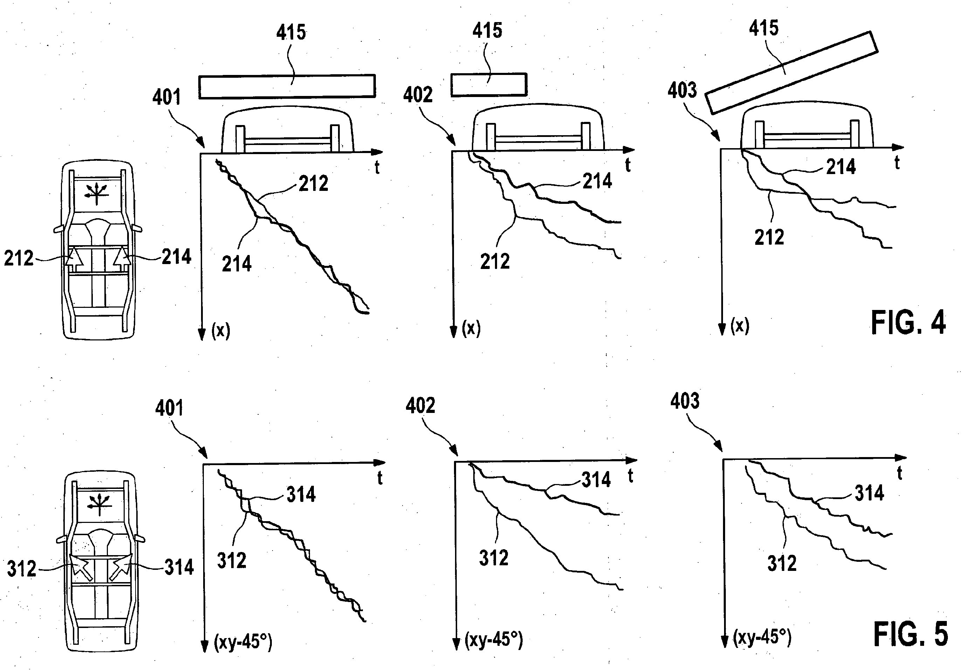

Die Figuren 4 und 5 zeigen diesen Unterschied für die verschiedenen Kollisionstypen illustriert. Dargestellt ist jeweils ein typischer Verlauf eines tiefpassgefilterten Beschleunigungssignals oder auch des integrierten Beschleunigungssignals von dem in Fig. 2 gezeigten linkem und rechtem Sensor für die drei verschiedenen Kollisionstypen Frontalkollision mit 0°-Winkel, Offset-Kollision und Winkel-Kollision.

Fig. 4 zeigt am linken Rand das in Fig. 2 gezeigte Fahrzeug mit den beiden Sensoren, die jeweils ein Beschleunigungssignal 212, 214 in X-Richtung bereitstellen. In drei Diagrammen 401, 402, 403 sind jeweils die den Sensoren zugeordneten Beschleunigungssignalverläufe 212, 214 über die Zeit aufgetragen. Auf der Abszisse ist jeweils die Zeit t und auf der Ordinate die tiefpassgefilterten Beschleunigungssignale 212, 214 in X-Richtung aufgetragen.

Das Diagramm 401 ist einer 0°-Kollision, also flach frontal (flat frontal), zugeordnet, bei der das Fahrzeug frontal und mit vollständiger Überlappung auf eine Barriere 415 trifft. Die Beschleunigungssignale 212, 214 weisen einen nahezu identischen linearen Verlauf auf.

Das Diagramm 402 ist einer Offset-Kollision (ODB), zugeordnet, bei der das Fahrzeug frontal, jedoch nur mit halbseitiger Überlappung, auf die Barriere 415 trifft. Die Überlappung besteht auf der linken Seite, auf der der Sensor 212 angeordnet ist. Die Beschleunigungssignale 212, 214 weisen unterschiedliche Verläufe auf. Das Beschleunigungssignal 214 weist eine geringere Steigung als das Beschleunigungssignal 212 auf.

Das Diagramm 403 ist einer Winkel-Kollision zugeordnet, bei der das Fahrzeug in einem Winkel auf die Barriere 415 trifft. Dabei trifft das Fahrzeug zuerst mit der linken Seite, auf der der Sensor 212 angeordnet ist, auf die Barriere 415 auf. Die Beschleunigungssignale 212, 214 weisen unterschiedliche Verläufe auf. Das Beschleunigungssignal 214 weist einen linearen Verlauf auf. Das Beschleunigungssignal 212 weist zu Beginn eine größere Steigung als das Beschleunigungssignal 214 und nach einer kurzen Zeit eine geringere Steigung auf, so dass sich die Beschleunigungssignale 212, 214 kreuzen.

Fig. 5 zeigt am linken Rand das in Fig. 3 gezeigte Fahrzeug mit den beiden Sensoren, wobei aus von dem links angeordnete Sensor bereitgestellten Daten ein resultierendes Beschleunigungssignal 312 in Richtung P45 und aus von dem rechts angeordneten Sensor ein resultierendes Beschleunigungssignal 314 in Richtung M45 bestimmt wird. Entsprechend zu Fig. 4 sind wiederum die drei Diagramme 401, 402, 403 gezeigt, die für die jeweiligen Kollisionen die den Sensoren zugeordneten Beschleunigungssignalverläufe 312, 314 über die Zeit anzeigen. Auf der Abszisse ist jeweils die Zeit t und auf der Ordinate die tiefpassgefilterten Beschleunigungssignale 212, 214 in XY-45°-Richtung aufgetragen.

Das Diagramm 401 ist wiederum der 0°-Kollision zugeordnet. Die Beschleunigungssignale 312, 314 weisen einen nahezu identischen linearen Verlauf auf.

Das Diagramm 402 ist wiederum der Offset-Kollision zugeordnet. Die Beschleunigungssignale 312, 314 weisen unterschiedliche Verläufe auf. Das Beschleunigungssignal 314 weist eine wesentlich geringere Steigung als das Beschleunigungssignal 312 auf.

Das Diagramm 403 ist wiederum der Winkel-Kollision zugeordnet. Die Beschleunigungssignale 312, 314 weisen unterschiedliche Verläufe auf. Dabei weist das Beschleunigungssignal 314 zunächst eine geringere Steigung als das Beschleunigungssignal 312 auf. Anschließend weisen die Beschleunigungssignale 312, 314 eine nahezu identische Steigung auf, so dass sich die Beschleunigungssignale 312, 314 nicht kreuzen.

Im Folgenden wird eine Funktion zur Kollisionstyp-Erkennung, gemäß einem Ausführungsbeispiel der vorliegenden Erfindung, beschrieben. Die Funktion zur Kollisionstyp-Erkennung verwendet die anhand der Figuren 3 und 5 beschriebenen XY-45° Signale als Eingangssignale.

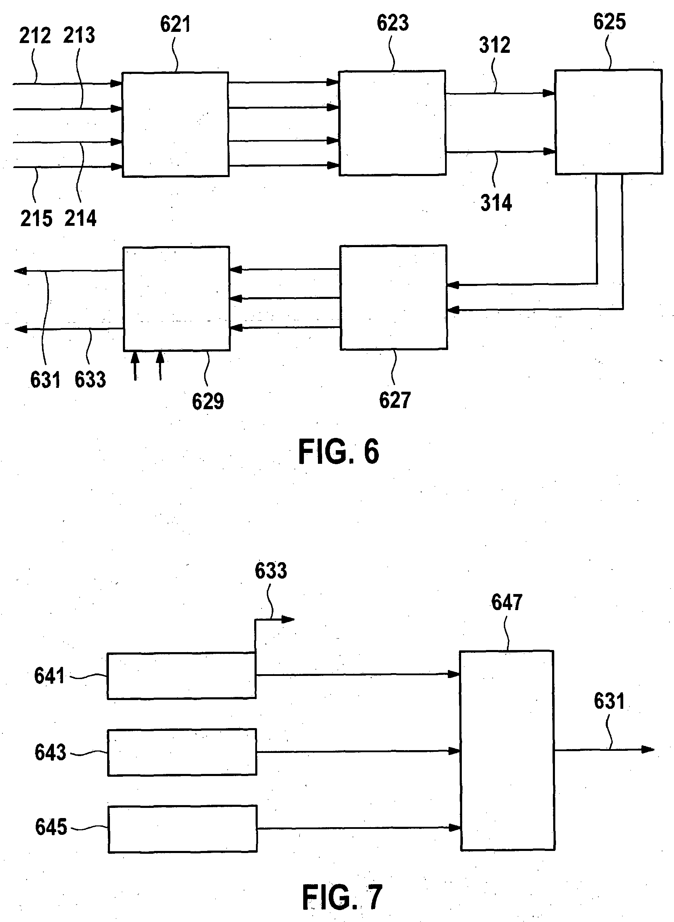

Fig. 6 zeigt ein Blockschaltbild eines Verfahrens zur Kollisionstyp-Erkennung, gemäß einem weiteren Ausführungsbeispiel der vorliegenden Erfindung. Einzelne Verfahrensschritte können in unterschiedlichen Modulen umgesetzt werden. Das Verfahren weist ein Vorverarbeitungs-Modul 621, ein Kombinations-Modul 623, ein Integrations-Modul 625, ein Merkmals-(Feature-)Berechnungs-Modul 627 und ein Kollisionstyp-Erkennungsmodul 629 auf.

Das Modul 621 ist ausgebildet, um Beschleunigungssignale, beispielsweise der in Fig. 2 gezeigten Sensoren zu empfangen. Gemäß diesem Ausführungsbeispiel empfängt das Modul 621 die Signale von zwei Sensoren, die jeweils ein Beschleunigungssignal in der Fahrzeuglängsrichtung X und ein Beschleunigungssignal in der Fahrzeugquerrichtung Y bereitstellen. Gemäß diesem Ausführungsbeispiel ist das Modul 621 ausgebildet, um ein PAS-X-Left-Signal 212, ein PAS-Y-Left-Signal 213, ein PAS-X-Right-Signal 214 und ein PAS-Y-Right-Signal 415 zu empfangen, einer Vorverarbeitung zu unterziehen und als vorverarbeitete Signale PAS-X-Left #, PAS-Y-Left #, PAS-X-Right # und PAS-Y-Right # an das Kombinations-Modul 623 bereitzustellen. Die Vorverarbeitung kann beispielsweise eine Tiefpassfilterung umfassen.

Die Eingangssignale PAS-X-Left, PAS-Y-Left stellen linksseitige Beschleunigungssignale in X- bzw. Y-Richtung dar. Die Eingangssignale PAS-X-Right, PAS-Y-Right stellen rechtsseitige Beschleunigungssignale in X- bzw. Y-Richtung dar.

Die Signale PAS-X-Left # stellen linksseitige Beschleunigungssignale in X- bzw. Y-Richtung, nach dem Vorverarbeitungsmodul 621 dar. Die Signale PAS-X-Right # stellen rechtsseitige Beschleunigungssignale in X- bzw. Y-Richtung, nach dem Vorverarbeitungsmodul 621 dar.

Das Modul 623 ist ausgebildet, um die Signale PAS-X-Left #, PAS-Y-Left #, PAS-X-Right # und PAS-Y-Right # zu empfangen und miteinander zu kombinieren, um resultierende Beschleunigungssignale 312, 314 zu bestimmen und bereitzustellen. Gemäß diesem Ausführungsbeispiel ist das Modul 623 ausgebildet, um aus den Signalen PAS-X-Left # und PAS-Y-Left # ein PAS-XY-45-Left-Signal 312 und aus den Signalen PAS-X-Right # und PAS-Y-Right # ein PAS-XY-45-Right-Signal 314 zu bestimmen. Die resultierenden Beschleunigungssignale 312, 314 können den in Fig. 3 gezeigten Beschleunigungsinformationen entsprechen. Das Modul 623 kann ausgebildet sein, um das resultierenden Beschleunigungssignal 312 durch eine Vektoraddition aus den Signalen PAS-X-Left # und PAS-Y-Left # und das resultierenden Beschleunigungssignal 314 durch eine Vektoraddition aus den Signalen PAS-X-Right # und PAS-Y-Right # zu bestimmen.

Das Modul 625 ist ausgebildet, um die Signale PAS-XY-45-Left 312 und PAS-XY-45-Right 314 zu empfangen, gemäß diesem Ausführungsbeispiel jeweils aufzuintegrieren, und als integrierte Signale Int_PAS-XY-45-Left und Int_PAS-XY-45-Right an das Modul 627 bereitzustellen.

Das Modul 627 ist ausgebildet, um die Signale Int_PAS-XY-45-Left und Int_PAS-XY-45-Right zu empfangen und aufzubereiten. Gemäß diesem Ausführungsbeispiel ist das Modul 627 ausgebildet, um basierend auf den Signalen Int_PAS-XY-45-Left und Int_PAS-XY-45-Right ein Sig_Diff-Signal, ein Sig_Sum-Signal und ein Norm_Offset-Signal zu bestimmen und an das Modul 629 bereitzustellen. Das Sig_Diff-Signal kann eine Differenz und das Sig_Sum-Signal eine Summe der Signale Int_PAS-XY-45-Left und Int_PAS-XY-45-Right repräsentieren. Das Norm_Offset-Signal kann ein Verhältnis aus den Signalen Sig_Diff-Signal und Sig_Sum repräsentieren.

Das Modul 629 ist ausgebildet, um die Signale Sig_Diff, Sig_Sum und Norm_Offset zu empfangen und basierend darauf eine Information über die Kollisionsart 631 und eine Information über die Kollisionsseite 633 zu bestimmen und bereitzustellen. Das Modul 629 kann ferner ausgebildet sein, um eine Signal Algo_Timer und ein Signal Algo_Dv zu empfangen und bei der Bestimmung der Informationen 631, 633 zu berücksichtigen.

Das Signal Algo Timer stellt eine Zeitbasis dar, die angibt, wie lange das aktuell erkannte Kollisionsereignis bereits andauert. Das Signal Algo_Dv beschreibt einen Geschwindigkeits-Abbau des Fahrzeugs in Längsrichtung, der im aktuellen Kollisionsereignis bereits erreicht wurde.

In dem Vorverarbeitungsmodul 621 findet eine Filterung statt. Im Allgemeinen eine Tiefpass-Filterung. Alternativ ist eine Mittelwertbildung, beispielsweise in Form einer Fenster-Integration, oder eine Bandpass-Filterung möglich.

In dem Kombinationsmodul 623 findet eine gewichtete Vektoraddition oder ungewichtete Vektoraddition der Sensor-Signale statt. Durch die Höhe der einzelnen Gewichtungsfaktoren kann das Verhältnis aus X- und Y-Komponenten im resultierenden Gesamtsignal beeinflusst werden. Zur Gewichtung kann das entsprechende Signal oder der entsprechende Signalwert mit einem Gewichtungswert multipliziert werden.

Hierbei gilt:

$$\text{PAS-XY-45-Left} = k_{X\text{-Left}} * \text{PAS-X-Left} \# + k_{Y\text{-Left}} * \text{PAS-Y-Left} \#$$

$$\text{PAS-XY-45-Right} = k_{x\text{-Right}} * \text{PAS-X-Right} \# + k_{y\text{-Right}} * \text{PAS-Y-Right} \#$$

Die Gewichtungsfaktoren $k_{X/Y\text{-Left/Right}}$ sind veränderlich. Es kann sich dabei um Applikationsparameter handeln.

In dem Integrationsmodul 625 findet eine Integration, d.h. zeitdiskrete Summation, der Signale statt.

$$\text{Int\_PAS} - XY - 45 - \text{Left} \quad = \sum_{n=0}^{n} \text{PAS} - XY - 45 - \text{Left}$$

$$\text{Int\_PAS} - XY - 45 - \text{Right} \quad = \sum_{n=0}^{n} \text{PAS} - XY - 45 - \text{Right}$$

Alternativ zu einer Einfach-Integration kann auch eine Doppelt-Integration oder eine Berechnung der Signalenergie durchgeführt werden.

In dem Feature-Berechnungsmodul 627 werden einige Eingangsgrößen für die nachfolgende Kollisionstyp-Erkennung berechnet.

Es gilt:

$$\text{Sig Diff} = \text{Int\_PAS-XY-45-Left} - \text{Int\_PAS-XY-45-Right}$$

$$\text{SigSum} = \text{Int\_PAS-XY-45-Left} + \text{Int\_PAS-XY-45-Right}$$

$$\text{Norm\_Offset} = \text{Sig\_Diff} / \text{Sig\_Sum}$$

Das Kollisionstyp-Erkennungsmodul 628 lässt sich in mehrere Teilmodule zerlegen.

Fig. 7 zeigt ein Blockschaltbild des Kollisionstyp-Erkennungsmoduls 629, gemäß einem Ausführungsbeispiel der vorliegenden Erfindung. Das Modul 629 weist einen NormOffset-Pfad 641, einen Dv-Pfad 643, einen Timer-Pfad 645 und eine Verknüpfungseinrichtung 647 auf.

Der NormOffset-Pfad 641 ist ausgebildet, um das Signal Norm_Offset zu empfangen und basierend darauf die Kollisionsseite als Signal CrashSide 633 sowie ein Signal NormOffset_Flag zu bestimmen und bereitzustellen. Dazu kann das Signal Norm_Offset einem oder mehreren Schwellwertvergleichen unterzogen werden. Der oder die Schwellwertvergleiche können innerhalb eines vorbestimmten Auswertefensters durchgeführt werden. Das Auswertefenster kann beispielsweise beginnen, wenn eine vorbestimmte Zeitdauer nach einem Startzeitpunkt der Kollision vergangen ist oder nachdem ein bestimmter Beschleunigungszustand erreicht wird.

Der Dv-Pfad 643 ist ausgebildet, um das Signal Sig_Diff zu empfangen und basierend darauf ein Signal Dv_Flag zu bestimmen und bereitzustellen. Dazu kann das Signal Sig_Diff oder ein Betrag des Signals Sig_Diff einem oder mehreren Schwellwertvergleichen unterzogen werden. Der oder die Schwellwertvergleiche können innerhalb eines vorbestimmten Zeitfensters nach Kollisionsbeginn durchgeführt werden. Der Timer-Pfad 645 ist ausgebildet, um das Signal Sig_Diff zu empfangen und basierend darauf ein Signal Timer_Flag zu bestimmen und bereitzustellen. Dazu kann das Signal Sig_Diff oder ein Betrag des Signals Sig_Diff einem oder mehreren weiteren Schwellwertvergleichen unterzogen werden. Der oder die Schwellwertvergleiche können innerhalb eines vorbestimmten Zeitfensters nach Kollisionsbeginn durchgeführt werden. Die Verknüpfungseinrichtung 647 ist ausgebildet, um die Signale NormOffset_Flag, Dv_Flag und Timer_Flag zu empfangen und basierend darauf den Kollisionstyp 631 zu bestimmen und bereitzustellen. Die Verknüpfungseinrichtung 647 kann als UND-Modul ausgebildet sein. Die Verknüpfungseinrichtung 647 kann eine Und-Verknüpfung der Eingangssignale durchführen, ohne dass eine weitere Auswertung stattfindet. Daraus kann das Signal 631 als binäres Signal resultieren, das anzeigen kann, ob eine Winkel-/ Offsetkollision erkannt bzw. nicht erkannt wurde. Diese Entscheidung kann für eine applizierbare Haltezeit lange gehalten werden.

Der von dem in Fig. 7 gezeigten Modul 629 umgesetzte Algorithmus in den einzelnen Teilpfaden 641, 643, 645 funktioniert gemäß einem Ausführungsbeispiel wie folgt:

Bei dem Modul NormOffset-Pfad 641 ist das Eingangssignal Norm_Offset im Falle einer exakt symmetrischen Kollision gleich Null. Andernfalls werden Werte ungleich Null erreicht, wobei das Vorzeichen des Signals Norm_Offset die Kollisionsrichtung, also linksseitig oder rechtsseitig, anzeigt.

Bezüglich des Signals CrashSide 633, das die Kollisionsseite angibt, gilt, das es größer als Null für linksseitige Winkel- oder Offset-Kollisionen und kleiner als Null für rechtsseitige Winkel- oder Offset-Kollisionen ist.

Bezüglich des Signals NormOffset_Flag gilt, das es gleich Eins ist, sobald das Signal Norm_Offset betragsmäßig eine Schwelle NormOffset_Thd überschreitet und gleich Null ist, falls keine Schwellüberschreitung stattfindet.

Der Vergleich der Werte des Signals Norm_Offset mit der Schwelle NormOffset_Thd kann innerhalb eines Aktivfensters erfolgen. Beispielsweise kann der Vergleich ab dann durchgeführt werden, wenn das Signal Sig_Sum einen vorbestimmten Wert erreicht oder überschritten hat. Alternativ kann der Vergleich auch ab dann durchgeführt werden, wenn eine vorbestimmte Zeitdauer nach Kollisionsbeginn vergangen ist.

Analog dazu kann das Aktivfenster am rechten Rand durch ein weitere Schwelle begrenzt werden, d.h. beispielsweise kann der Vergleich ab dann nicht mehr durchgeführt werden, wenn das Signal Sig_Sum einen vorbestimmten Wert erreicht oder überschritten hat. Auch hier ist alternativ zum Signal Sig_Sum eine vorbestimmte Zeitdauer als Begrenzung möglich.

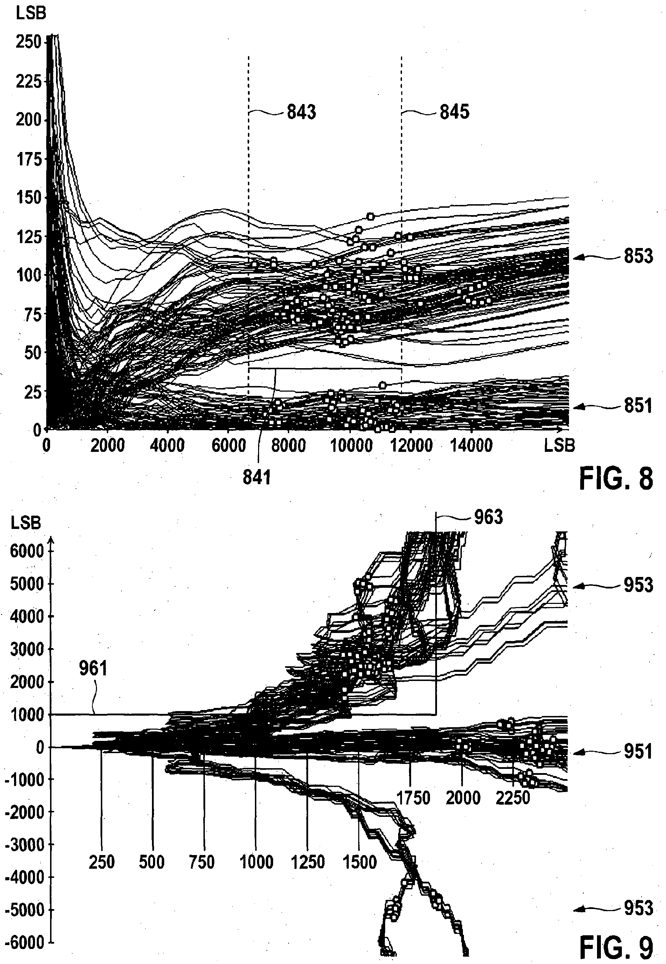

Fig. 8 zeigt eine Darstellung typischer Signalverläufe eines Betrags des Signals Norm_Offset, aufgetragen über das Signal Sig_Sum. Auf der Abszisse sind Werte des Signals Sig_Sum und auf der Ordinate Werte des Signals |Norm_Offset| aufgetragen. Ferner ist eine Schwelle NormOffset_Thd 841 sowie ein AktivFenster, das zwischen zwei Grenzwerten StabMin_Thd 843 und StabMax_Thd 845 liegt. Ein Vergleich der Werte des Signals |Norm_Offset|, aufgetragen über Werten des Signals Sig_Sum, mit der Schwelle NormOffset_Thd 841 kann fortlaufend oder nur innerhalb des Aktivfensters durchgeführt werden. Innerhalb des Aktivfensters liegen Signalwerte des Signals |Norm_Offset|, die aus einer FlatFrontal (0°)-Kollision resultieren unterhalb der Schwelle NormOffset_Thd 841. Dagegen liegen Signalwerte des Signals |Norm_Offset|, die aus einer Winkel- oder einer Offset-Kollision resultieren oberhalb der Schwelle NormOffset_Thd 841.

Auf diese Weise kann durch einen Vergleich des Signalverlaufs des Signals |Norm_Offset| mit dem Schwellwert NormOffset_Thd 841 erkannt werden, ob es sich um eine Winkel- oder Offset-Kollision oder um eine Frontalkollision mit vollständiger Überlappung handelt.

Wie in Fig. 8 gezeigt kann mit Hilfe der beiden Parameter StabMin_Thd 843 und StabMax_Thd 845 optional ein Aktiv-Fenster eingestellt werden. Gemäß diesem Ausführungsbeispiel wird der Schwellwertvergleich zwischen NormOffset_Thd und dem Betrag des Eingangssignals Norm Offset nur innerhalb des AktivFensters durchgeführt. Der Vergleich wird also dann durchgeführt, wenn die aufsummierten Beschleunigungssignale den vorbestimmten Wert StabMin_Thd 843 erreicht oder überschritten und den vorbestimmten Wert StabMax_Thd 845 noch nicht erreicht oder noch nicht überschritten haben.

Fig. 9 zeigt für das Modul Dv-Pfad 643 einen Verlauf des Signals Sig_Diff. Auf der Abszisse sind Werte des Signals Algo_Dv und auf der Ordinate Werte des Signals Sig_Diff aufgetragen. Somit ist ein Verlauf der Werte des Signals Sig_Diff über den Werten des Signals Algo_Dv aufgetragen. Algo_Dv kennzeichnet den Geschwindigkeits-Abbau des Fahrzeugs in Längsrichtung, der im aktuellen Kollisionsereignis bereits erreicht wurde. Ferner ist ein Schwellwert SigDiffDv_Thd 961 und ein Schwellwert DisableDv_Thd 963 eingezeichnet.

Aus einer FlatFrontal (0°)-Kollision resultierende typische Signalverläufe 951 liegen unterhalb des Schwellwertes SigDiffDv_Thd 961. Aus einer Winkel- oder einer Offset-Kollision resultierende typische Signalverläufe 953 überschreiten vor Erreichen des Schwellwertes DisableDv_Thd 963 den Schwellwert Sig-DiffDv_Thd 961.

Auf diese Weise kann durch einen Vergleich des Signalverlaufs des Signals Sig_Diff mit dem Schwellwert SigDiffDv_Thd 961 erkannt werden, ob es sich um eine Winkel- oder Offset-Kollision oder um eine Frontalkollision mit vollständiger Überlappung handelt.

Es gilt, dass das Signal Dv_Flag gleich Null ist, falls |SigDiff| ≤ SigDiffDv_Thd und, dass das Signal Dv_Flag gleich Eins ist, falls |SigDiff| > SigDiffDv_Thd ist. Für Algo_Dv > DisableDv_Thd wird der Schwellwertvergleich nicht mehr durchgeführt.

Der Vergleich der Werte des Signals Sig_Diff mit der Schwelle SigDiffDv_Thd kann vom Kollisionsbeginn an solange durchgeführt werden, bis das Signal Algo_Dv einen vorbestimmten Wert erreicht oder überschritten hat. Alternativ kann der Vergleich auch vom Kollisionsbeginn ab für eine vorbestimmte Zeitdauer durchgeführt werden.

Für das Modul Timer-Pfad 645 gilt, dass das Signal Timer_Flag gleich Null ist, falls |SigDiff| ≤ SigDiffTimer_Thd ist und dass das Signal Timer_Flag gleich Eins ist, falls |SigDiff| > SigDiffTimer_Thd ist.

Für Algo_Timer > DisableTimer_Thd wird der Schwellwertvergleich nicht mehr durchgeführt.

Der Vergleich der Werte des Signals Sig_Diff mit der Schwelle SigDiffTimer_Thd kann vom Kollisionsbeginn ab solange durchgeführt werden, bis das Signal Algo_Timer einen vorbestimmten Wert erreicht oder überschritten hat.

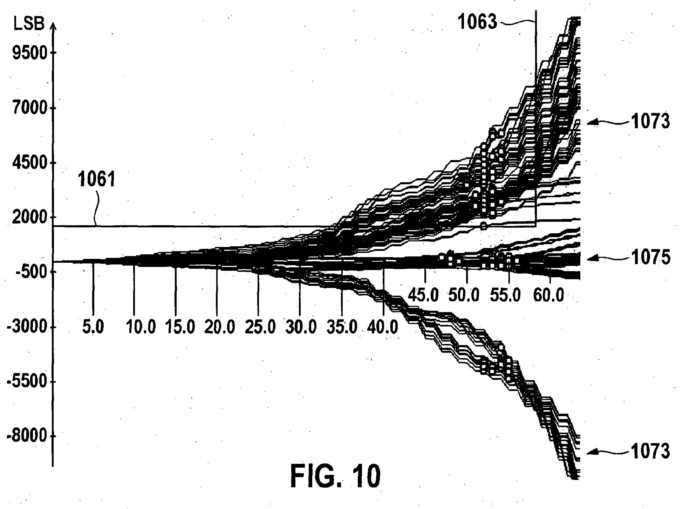

Fig. 10 zeigt für das Modul Timer-Pfad 645 einen Verlauf des Signals Sig_Diff. Auf der Abszisse sind Werte des Signals Algo_Timer und auf der Ordinate Werte des Signals Sig_Diff aufgetragen. Somit ist ein Verlauf der Werte des Signals Sig_Diff über den Werten des Signals Algo_Timer aufgetragen. Ferner ist ein Schwellwert SigDiffTimer_Thd 961 und ein Schwellwert Disable Timer_Thd 963 eingezeichnet.

Typische Signalverläufe 1073, die aus einer Winkel- oder einer Offset-Kollision resultieren, überschreiten vor Erreichen des Schwellwertes DisableTimer_Thd 1063 den Schwellwert SigDiffTimer_Thd 1061. Typische Signalverläufe 1075, die aus einer Kollision resultieren, bei der keine Rückhaltemittel ausgelöst werden, einem sogenannten NoFire-Crasch (AZT) liegen unterhalb des Schwellwertes SigDiffTimer_Thd 1061.

Auf diese Weise kann durch einen Vergleich des Signalverlaufs des Signals Sig_Diff mit dem Schwellwert SigDiffTimer_Thd 1061 erkannt werden, ob es sich um eine Winkel- oder Offset-Kollision handelt, bei der Insassenschutzmittel auzulösen sind, oder ob es sich um eine Nichtauslösekollision handelt.

Alternativ zur Vektor-Addition der beiden X- und Y-Kanäle eines 2-kanaligen Einzelsensors ist auch die Vektor-Addition aus verteilten Sensoren möglich, z.B. X-Komponenten von Upfront-Sensoren verrechnen mit Y-Komponenten von peripheren oder zentral angeordneten Y-Sensoren.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1.  Verfahren zur Ermittlung eines Typs einer Kollision eines Fahrzeugs, das die folgenden Schritte umfasst:

    Empfangen einer ersten Beschleunigungsinformation (212), einer zweiten Beschleunigungsinformation (213), einer dritten Beschleunigungsinformation (214) und einer vierten Beschleunigungsinformation (215) über eine Empfangsschnittstelle, wobei die erste Beschleunigungsinformation eine Beschleunigung des Fahrzeugs in einer ersten Richtung, die zweiten Beschleunigungsinformation eine Beschleunigung des Fahrzeugs in einer zweiten Richtung, die dritte Beschleunigungsinformation eine Beschleunigung des Fahrzeugs in einer dritten Richtung und die vierte Beschleunigungsinformation eine Beschleunigung des Fahrzeugs in einer vierten Richtung repräsentiert, wobei die erste und die dritte Richtung jeweils eine Hauptkomponente in einer Fahrzeuglängsrichtung und die zweite und die vierte Richtung jeweils eine Hauptkomponente in zueinander entgegengesetzten Fahrzeugquerrichtungen aufweisen;
    Bestimmen einer ersten resultierenden Beschleunigungsinformation (312) aus der ersten Beschleunigungsinformation und der zweiten Beschleunigungsinformation und einer zweiten resultierenden Beschleunigungsinformation (314) aus der dritten Beschleunigungsinformation und der vierten Beschleunigungsinformation;
    Kombinieren der ersten resultierenden Beschleunigungsinformation und der zweiten resultierenden Beschleunigungsinformation, um mindestens eine Auswerteinformation zu erhalten, wobei im Schritt des Kombinierens eine Differenz aus der ersten resultierenden Beschleunigungsinformation und der zweiten resultierenden Beschleunigungsinformation gebildet wird; und
    Ermitteln des Typs der Kollision (631, 633) basierend auf der mindestens einen Auswerteinformation, wobei im Schritt des Ermittelns die Differenz mit einem Schwellwert (961) verglichen wird, um den Typ der Kollision zu erkennen.

2. Verfahren gemäß Anspruch 1, bei dem Startpunkte der Hauptkomponenten der ersten und der zweiten Richtung in Bezug auf die Fahrzeugquerrichtung versetzt zueinander angeordnet sind.

3. Verfahren gemäß einem der vorangegangenen Ansprüche, bei dem die resultierenden Beschleunigungsinformationen (312, 314) jeweils mittels einer Vektoraddition aus den entsprechenden Beschleunigungsinformationen (212, 213, 214, 215) bestimmt werden.

4. Verfahren gemäß einem der vorangegangenen Ansprüche, mit einem Schritt des Gewichtens der ersten Beschleunigungsinformationen (212) mit einem ersten Gewichtungswert, der zweiten Beschleunigungsinformation (213) mit einem zweiten Gewichtungswert, der dritten Beschleunigungsinformation (214) mit einem dritten Gewichtungswert und der vierten Beschleunigungsinformation (215) mit einem vierten Gewichtungswert, um eine gewichtete erste, zweite, dritte und vierte Beschleunigungsinformation zu erhalten und wobei im Schritt des Bestimmens die erste resultierende Beschleunigungsinformation (312) aus der gewichteten ersten Beschleunigungsinformation und der gewichteten dritten Beschleunigungsinformation bestimmt wird und die zweite resultierende Beschleunigungsinformation (314) aus der gewichteten zweiten Beschleunigungsinformation und der gewichteten vierten Beschleunigungsinformation bestimmt wird.

5. Verfahren gemäß einem der vorangegangenen Ansprüche, bei dem im Schritt des Ermittelns erkannt wird, ob es sich bei der Kollision um eine Winkelkollision, eine Offsetkollision oder um eine Frontalkollision handelt.

6. Verfahren gemäß einem der vorangegangenen Ansprüche, bei dem im Schritt des Ermittelns die Differenz mit einem weiteren Schwellwert (1061) verglichen wird, um zu entscheiden, ob bei der Kollision Rückhaltemittel auszulösen sind oder nicht auszulösen sind.

7. Verfahren gemäß einem der vorangegangenen Ansprüche, bei dem im Schritt des Kombinierens eine Summe aus der ersten resultierenden Beschleunigungsinformation und der zweiten resultierenden Beschleunigungsinformation und ein Quotient aus der Differenz und der Summe gebildet wird, und im Schritt des Ermittelns der Quotient mit einem weiteren Schwellwert (841) verglichen wird, um den Typ der Kollision (631) zu erkennen und/oder der Kollision eine Fahrzeugseite (633) zuzuordnen.

8. Steuergerät zur Ermittlung eines Typs einer Kollision eines Fahrzeugs, umfassend Mittel zur Ausführung der Schritte eines Verfahrens gemäß einem der Ansprüche 1 bis 7.

9. Computerprogrammprodukt, das so angepasst ist, dass es die Schritte eines Verfahrens nach einem der Ansprüche 1 bis 7 ausführt.

**Claims**

1. Method for determining a type of a collision of a vehicle, which method comprises the following steps:

   receiving a first acceleration information item (212), a second acceleration information item (213), a third acceleration information item (214) and a fourth acceleration information item (215) via a reception interface, wherein the first acceleration information item represents acceleration of the vehicle in a first direction, the second acceleration information item represents acceleration of the vehicle in a second direction, the third acceleration information item represents acceleration of the vehicle in a third direction, and the fourth acceleration information item represents acceleration of the vehicle in a fourth direction, wherein the first and third directions each have a main component in a vehicle longitudinal direction, and the second and fourth directions each have a main component in the vehicle lateral directions opposing one another;
   determining a first resulting acceleration information item (312) from the first acceleration information item and the second acceleration information item and a second resulting acceleration information item (314) from the third acceleration information item and the fourth acceleration information item;
   combining the first resulting acceleration information item and the second resulting acceleration information item in order to obtain at least one evaluation information item, wherein a difference composed of the first resulting acceleration information item and the second resulting acceleration information item is formed in the combination step; and
   detecting the type of the collision (631, 633) on the basis of the at least one evaluation information item, wherein in the detection step the difference is compared with a threshold value (961) in order to detect the type of the collision.

2.  Method according to Claim 1, in which starting points of the main components of the first and second directions are arranged offset with respect to one another in the vehicle lateral direction.

3.  Method according to one of the preceding claims, in which the resulting acceleration information items (312, 314) are each determined by means of a vector addition composed of the corresponding acceleration information items (212, 213, 214, 215).

4.  Method according to one of the preceding claims, having a step of weighting the first acceleration information items (212) with a first weighting value, the second acceleration information item (213) with a second weighting value, the third acceleration information item (214) with a third weighting value and the fourth acceleration information item (215) with a fourth weighting value, in order to obtain a weighted first, second, third and fourth acceleration information item, and wherein in the determination step the first resulting acceleration information item (312) is determined from the weighted first acceleration information item and the weighted third acceleration information item, and the second resulting acceleration information item (314) is determined from the weighted second acceleration information item and the weighted fourth acceleration information item.

5.  Method according to one of the preceding claims, in which in the detection step it is detected whether the collision is an angular collision, an offset collision or a head-on collision.

6.  Method according to one of the preceding claims, in which in the detection step the difference is compared with a further threshold value (1061) in order to decide whether or not to trigger restraining means when the collision occurs.

7.  Method according to one of the preceding claims, in which in the combination step a sum of the first resulting acceleration information item and the second resulting acceleration information item and a quotient of the difference and of the sum are formed, and in the detection step the quotient is compared with a further threshold value (841) in order to detect the type of collision (631) and/or to assign a vehicle side (633) to the collision.

8.  Control unit for detecting a type of a collision of a vehicle comprising means for carrying out the steps of a method according to one of Claims 1 to 7.

9.  Computer program product which is adapted in such a way that it carries out the steps of a method according to one of Claims 1 to 7.

**Revendications**

1.  Procédé de détermination d'un type d'une collision d'un véhicule, comprenant les étapes suivantes :

    recevoir une première information d'accélération (212), une deuxième information d'accélération (213), une troisième information d'accélération (214) et une quatrième information d'accélération (215) par l'intermédiaire d'une interface de réception, dans lequel la première information d'accélération représente une accélération du véhicule dans une première direction, la deuxième information d'accélération représente une accélération du véhicule dans une deuxième direction, la troisième information d'accélération représente une accélération du véhicule dans une troisième direction et la quatrième information d'accélération représente une accélération du véhicule dans une quatrième direction, dans lequel les première et troisième directions comprennent respectivement une composante principale dans une direction longitudinale du véhicule et les deuxième et quatrième directions comprennent respectivement une composante principale dans des directions transversales opposées l'une à l'autre du véhicule ;
    déterminer une première information d'accélération résultante (312) à partir de la première information d'accélération et de la deuxième information d'accélération et une deuxième information d'accélération résultante (314) à partir de la troisième information d'accélération et de la quatrième information d'accélération ;
    combiner la première information d'accélération résultante et la deuxième information d'accélération résultante afin d'obtenir au moins une information d'évaluation, dans lequel, lors de l'étape de combinaison, une différence est établie à partir de la première information d'accélération résultante et de la deuxième information d'accélération résultante ; et
    déterminer le type de la collision (631, 633) sur la base de l'au moins une information d'évaluation, dans lequel, lors de l'étape de détermination, la différence est comparée à une valeur de seuil (961) afin de reconnaître le type de la collision.

2. Procédé selon la revendication 1, dans lequel des points de départ des composantes principales des première et deuxième directions sont disposés de manière décalée l'un de l'autre par rapport à la direction transversale du véhicule.

3. Procédé selon l'une quelconque des revendications précédentes, dans lequel les informations d'accélération résultantes (312, 314) sont respectivement déterminées au moyen d'une addition vectorielle à partir des informations d'accélération correspondantes (212, 213, 214, 215).

4. Procédé selon l'une quelconque des revendications précédentes, comprenant une étape consistant à pondérer les premières informations de pondération (212) avec une première valeur de pondération, à pondérer la deuxième information d'accélération (213) avec une deuxième valeur de pondération, à pondérer la troisième information d'accélération (214) avec une troisième valeur de pondération et à pondérer la quatrième information d'accélération (215) avec une quatrième valeur de pondération afin d'obtenir des première, deuxième, troisième et quatrième informations d'accélération pondérées et dans lequel, lors de l'étape de détermination, la première information d'accélération résultante (312) est déterminée à partir de la première information d'accélération pondérée et de la troisième information d'accélération pondérée et la troisième information d'accélération résultante (314) est déterminée à partir de la deuxième information d'accélération pondérée et de la quatrième information d'accélération pondérée.

5. Procédé selon l'une quelconque des revendications précédentes, dans lequel, lors de l'étape de détermination, il est détecté si la collision est une collision de biais, une collision désaxée ou une collision frontale.

6. Procédé selon l'une quelconque des revendications précédentes, dans lequel, lors de l'étape de détermination, la différence est comparée à une autre valeur de seuil (1061) afin de décider si des moyens de retenue doivent ou non être déclenchés lors de la collision.

7. Procédé selon l'une quelconque des revendications précédentes, dans lequel, lors de l'étape de combinaison, une somme est établie à partir de la première information d'accélération résultante et de la deuxième information d'accélération résultante et un quotient est établi à partir de la différence et de la somme et, lors de l'étape de détermination, le quotient est comparé à une autre valeur de seuil (841) afin de reconnaître le type de la collision (631) et/ou d'associer un côté du véhicule (633) à la collision.

8. Appareil de commande destiné à déterminer un type d'une collision d'un véhicule, comprenant des moyens destinés à mettre en oeuvre les étapes d'un procédé selon l'une quelconque des revendications 1 à 7.

9. Produit de programme informatique qui est apte à mettre en oeuvre les étapes d'un procédé selon l'une quelconque des revendications 1 à 7.

FIG. 1

FIG. 2

FIG. 3

FIG. 4

FIG. 5

EP 2 509 828 B1

FIG. 6

FIG. 7

FIG. 8

FIG. 9

FIG. 10

**IN DER BESCHREIBUNG AUFGEFÜHRTE DOKUMENTE**

**In der Beschreibung aufgeführte Patentdokumente**

- DE 102004029816 A1
- EP 1607273 A1